Europäisches Patentamt

(19) European Patent Office

Office européen des brevets

(11) Publication number: 0 134 838
A1

# (12) EUROPEAN PATENT APPLICATION

(21) Application number: 83109456.0

(22) Date of filing: 22.09.83

(51) Int. Cl.⁴: **B 01 D 47/12**
B 01 D 50/00, B 01 D 53/18

(43) Date of publication of application:
27.03.85 Bulletin 85/13

(84) Designated Contracting States:
AT BE CH DE FR GB IT LI NL SE

(71) Applicant: Järvenpää, Viljo Juhana
Vellamontie 21 as. 6
SF-04200 Kerava(FI)

(72) Inventor: Järvenpää, Viljo Juhana
Vellamontie 21 as. 6
SF-04200 Kerava(FI)

(74) Representative: Grams, Klaus Dieter, Dipl.-Ing. et al,
Patentanwaltsbüro Tiedtke-Bühling-Kinne-
Grupe-Pellmann-Grams-Struif Bavariaring 4
D-8000 München 2(DE)

(54) Means for removing gaseous components and/or solid impurities present in a gaseous fluid flow.

(57) The invention concerns a means for removing gaseous components and/or solid impurities present in a gaseous fluid flow. The means (10) comprises a fluid flow pre-purification section (11) with a fluid flow (14) inlet connector (13), a fine-purification section (12), within which has been disposed a scrubber means (32), an exit connector (40) for carrying off the purified fluid flow (39), and a first connector (19) for conducting a first scrubbing liquid (17) into the pre-purification section (11) and for bringing it into contact with the fluid flow (14). The end region (15) adjacent to the scrubber means (32) of the pre-purification section (11) tapers in cross-section to the purpose of accelerating the fluid flow (14) passing through the pre-purification section (11) prior to entrance of the fluid flow (14) in said scrubber means (32). To that region of the pre-purification section (11) where the fluid flow (14) is accelerated has been directed a second connector (28) for bringing a second scrubbing liquid (26) into contact with the pre-purified fluid flow, whereby is gained the advantage that no major scrubbing liquid quantities are needed to attain reliable operation.

EP 0 134 838 A1

0134838

Means for removing gaseous components and/or solid impurities
present in a gaseous fluid

The present invention concerns a means serving the removal of gaseous components and/or solid impurities present in a gaseous fluid
flow, said means comprising a fluid flow pre-purification section
with an inlet connector for the fluid flow, a fine-purification
section within which has been accommodated a scrubber means, an
exit connector for carrying off the purified fluid flow and a first
connector for conducting a first washing liquid into the pre-purification section and bringing it into contact with the fluid flow,
and in said means the end region adjacent to the scrubber means of
the pre-purification section tapering in cross sectional diameter
with a view to accelerating the fluid flow passing through said
pre-purification section prior to the entrance of the fluid flow in
said scrubber means.

Gaseous fluid flows frequently contain impurities both in the form
of gaseuous components and of solid particles, which have to be
removed prior to blowing out or reusing the fluid flow. In practice, that situation is also frequently encountered in which the
gas flow contains solid components in such abundance that their
separation is indicated before the flow enters the scrubber. It is
common in usual circumstances to use towards purification of the
gaseous fluid flow a wet scrubber in which the gaseous fluid flow
is conducted into the frame portion of a separator, in other words,
into a fluid tank or reaction portion, where endeavours are made to
bring the scrubbing liquid and the gaseous fluid flow into the most
complete contact possible with each other. At this scrubbing phase
at least of the coarser fraction of the solid matter the greater
part separates and remains in the separating tank. However, endeavours are mostly made to achieve separation of the greater part of
the solid matter in dry state already, before the scrubber, either
in a settling chamber or in a cyclone separator. By this design the
advantage is gained that the quantity of impurities carried into the scrubbing liquid is minimized, whence the amount of sludge that has to be carried off will also remain minimal. After the scrubber part usually a blower is provided because then the wear suffered by the blower will be less. After the blower follows furthermore a droplet separator; depending on the application this may consist of a grille, a set of gratings, droplet separators resembling a cyclone separator, various rotating and round towers, etc.

In scrubber designs of prior art, the blower is usually similar to a conventional centrifugal blower. A blower design of the so-called disintegrator type is also known in the art, in which the gaseous fluid flow is directed with its impurities, as is also the scrubbing fluid. A design of this kind requires high power output from the drive, and the wear of the blower is also high.

In a scrubber of the Venturi type, the gaseous fluid flow is accelerated with its impurities in the venturi section to gain high velocity, and at the same time the scrubbing liquid is inducted into the accelerated fluid flow. After the venturi section, whereat the velocity of the gaseous fluid flow is reduced, there is a droplet separator, where in the first place the impurities serve as crystallisation nuclei for the drops.

One has also towards purification of a gaseous fluid flow employed the so-called S-wave scrubber, where the gaseous fluid flow, after flowing together with the scrubbing liquid through an S-wave shaped slit, ends up in a free space and thence further in a blower. There is no actual separate droplet separator: separation of droplets takes place in the free space after the S wave before the blower. In this design, too, the risk is present that supercondensing moisture may be entrained with the gaseous fluid flow and therefore droplets are flung out and into the surroundings.

As to the level of technology, reference is made to the Finnish patent application No. 810548, in which a wet scrubber is disclosed in which the end section adjacent to the scrubber means of its tubular fluid flow inlet connector is conically tapering for accelerating the fluid flow through the inlet connector before the fluid flow is carried to the scrubber means. In this design of prior art, the tubular inlet connector is provided with holes which receive the return flow of the scrubbing liquid into the inlet connector, and apertures of this kind have been placed in the region of the inlet connector where the fluid flow is not accelerated. In this design of prior art, the return flow of the scrubbing liquid within the tubular inlet connector produces a pre-purification of the fluid flow. This design of prior art is not applicable in all circumstances. In particular, if the fluid flow being purified contains large quantities of impurities or if the gaseous fluid flow being purified is very hot, the design as in the Finnish patent application No. 810548 is not satisfactory. Moreover, this design of prior art has the drawback that it is necessary to use very large quantities of scrubbing liquid and in spite of that the circulation of the scrubbing liquid becomes difficult, or the scrubbing liquid quantity becomes so heavily contaminated that its circulation is impeded and in the end the situation is reached in which the limit of purity of the gaseous fluid flow that is being purified fails to attain the required standard of purification, owing to the impurities in the scrubbing liquid. Neither can this means known in the art be used in a reliable manner in a case when it is desired to accelerate the fluid flow that is being scrubbed to a very high velocity, because then the danger is incurred that through the apertures in the tubular inlet connector impurities present in the scrubbing liquid circulation system may be entrained with the pure fluid flow.

The object of the invention is to accomplish an improvement of scrubber designs known in the art. It is a detailed object of the invention to provide a scrubber design necessitating no exceedingly large scrubbing liquid quantities for attainment of a reliable result of scrubbing. It is a further object of the invention to provide a scrubber design which is particularly well applicable for gaseous fluid flows containing very large amounts of impurities and for very hot gaseous fluid flows. The other objects of the invention, and the advantges gainable thereby, will become apparent from the disclosure of the invention.

The object of the invention is achieved with a means mainly characterized in that into the region of the pre-purifying section in which the fluid flow is being accelerated has been conducted another connector for bringing another scrubbing liquid into contact with the pre-purified fluid flow.

The rest of the characteristic features of the means of the invention are stated in claims 2-6.

By the means of the invention numerous significant advantages are gained. In the means of the invention, minimal quantities of scrubbing liquid may be used and very high scrubbing efficiency is attained all the same, even without scrubbers requiring a high energy input. In the means of the invention it has been understood to use two separate scrubbing liquid systems, whereby the first scrubbing fluid may be allowed freely to become concentrated in the scrubbing liquid circulation system to desired concentration. Since the gaseous fluid flow is already exceedingly pure after the pre-purification step, the quality of the second scrubbing liquid remains pure during a very long period in spite of the fact that the second scrubbing liquid is also circulated. In addition, it is ensured in the problem solution of the invention that the impurities present in the first scrubbing liquid cannot in any circumstances be entrained with the gaseous fluid flow already purified.

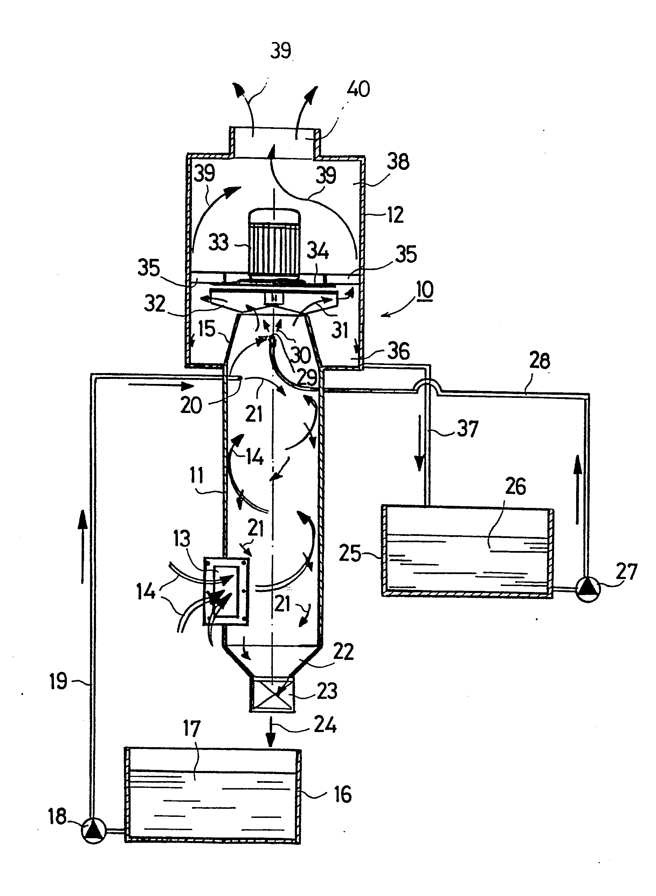

The invention is described in detail with reference being made to an advantageous embodiment of the invention presented in the figure of the attached drawing, but to which the invention is not meant to be exclusively confined.

The figure of the drawing presents, in schematical elevational view, an advantageous embodiment of the invention.

In the figure of the drawing, the means of the invention in general is indicated by the reference numeral 10. The means 10 comprises a gaseous fluid flow pre-purification section 11 and a fine purification section 12. In this embodiment, the pre-purification section
11 is a tubular volume provided with an inlet flow aperture 13 for
the entering gaseous fluid flow 14. The entering gaseous fluid flow
14 is drawn through the inlet aperture 13 into the tubular volume
11 tangentially, whereby the incoming gaseous fluid flow 14 is set
in an upwardly directed rotary motion within the tubular volume 11.
The upper part 15 of the tubular volume 11 is advantageously conically tapering, which causes the fluid flow 14 flowing within the
tubular volume 11 to be accelerated in the conically narrowing
region 15.

The means further comprises a tank 16 with scrubbing liquid 17. A
pump 18 has been disposed to pump scrubbing liquid 17 from the tank
16 through the tubular connector 19, and the tubular connector 19
has been disposed to pass through the envelope of the tubular volume 11, whereby the discharge aperture 20 of the tubular connector
19 directs the scrubbing liquid 17 against the wall of the tubular
volume 11 and the scrubbing liquid 17 flows in a rotary motion
downward in the tubular volume 11. Since the incoming fluid flow 14
and the flow 21 of the scrubbing liquid 17 in rotary motion are
opposed in direction, the scrubbing liquid 17 will flush with great
efficiency the incoming gaseous fluid flow 14 and remove from the
fluid flow 14 at least the largest and heaviest solid impurities.
The scrubbing liquid 17 and the solid impurities run down into the
bottom part 22 of the tubular volume 11, wherefrom they are conducted back to the tank 16 as a flow 24, through a valve means 23.

According to the fundamental insight of the invention, into that
section of the tubular volume 11 in which the gaseous fluid flow 14
is accelerated, that is in the present embodiment into the conical
section 15, is conducted through another connector 28 a second
scrubbing liquid 26. In this embodiment, a pump 27 has been disposed to draw second scrubbing liquid 26 from the tank 25 by the
tubular connector 28, and the second scrubbing liquid 26 discharges
from the nozzle of the tubular connector 28, or the discharge aperture 29, as a flow 30. The second scrubbing liquid 26 may be even

0134838

highly pure and it differs in composition from the first scrubbing liquid 17. After the nozzle 30, the second scrubbing liquid 26 presented in the form of flows constituted by nozzle jets 30 is admixed to the already pre-purified gaseous fluid flow 14, whereby the flow composed in combination by the already pre-purified gaseous fluid flow 14 and the nozzle sprays 30 of the second scrubbing liquid 26, and which has been denoted with the reference numeral 31, gains further velocity, accelerated by the impeller of the scrubber means 32. In this embodiment, an electric motor 33 has been disposed to rotate the impeller of the scrubber means 32, and the electromotor 33 has been supported by the aid of a plate 34 and struts 35.

After passing through the impeller of the scrubber means 32, the fluid flow 31 is purified from liquid droplets of the second scrubbing liquid 26, which are flung on the walls of the lower part 36 of the fine-purification volume 12 and which then run from the lower part 36 through the tubular connector 37 back to the tank 25. The pure gaseous fluid flow, indicated with the reference numeral 39, is directed to the top part 38 of the fine-purification section 12 and departs from the fine-purification section 12 through the outflow aperture 40.

In the means 10 of the invention the desired object is attained that the first scrubbing liquid 17 may be concentrated to desired concentration, or the first scrubbing liquid 17 may be even highly supersaturated. The second scrubbing liquid 26 may also be an alkali, even if the first scrubbing liquid 17 were acid. This affords the remarkable advantage that the gaseous fluid flow 14 being purified with the means 10 of the invention may also be neutralized in connection with scrubbing. The amount of the second scrubbing liquid 26 may be even considerably less than that of the first scrubbing liquid 17, but a very good purifying result is achieved with the means 10 of the invention, in fact using lower power electromotors 33, because the second scrubbing liquid 26 passing through the impeller of the scrubber means 32 requires little additional acceleration. The nozzle 20 of the flow tube 19 of the first

0134838

scrubbing liquid 17, as well as the nozzle 29 of the flow tube 28
of the second scrubbing liquid 26, may naturally be controllable in
various ways so that desired spray effect is obtained on the walls
of the tubular volume 11.

In the foregoing has only been presented one advantageous embodiment of the invention, and it is obvious to a person skilled in the
art that numerous modifications thereof are possible within the
scope of      the inventive idea stated in the attached claims.

0134838

## Claims

1. Means for removing gaseous components and/or solid impurities present in a gaseous fluid flow, said means (10) comprising a fluid flow pre-purification section (11) comprising a fluid flow (14) inlet connector (13), a fine-purification section (12), within which has been disposed a scrubber means (32), an exit connector (40) for carrying off the purified fluid flow (39) and a first connector (19) for conducting a first scrubbing liquid (17) into the pre-purification section (11) and for bringing it into contact with the fluid flow (14), and in said means (10) the end region (15) adjacent to the scrubber means (32) of the pre-purification section (11) tapering in cross-section to the purpose of accelerating the fluid flow (14) passing through said pre-purification section (11) prior to entrance of the fluid flow (14) in said scrubber means (32), characterized in that to the region of the pre-purification section (11) where the fluid flow (14) is accelerated has been directed a second connector (28) for bringing a second scrubbing liquid (26) into contact with the pre-purified fluid flow.

2. Means according to claim 1, characterized in that the inlet connector (28) of the second scrubbing liquid (26) has been disposed to pass through the wall of the pre-purification section (11) and directed within the pre-purification section (11) towards its flow aperture aiming towards the scrubber means (32).

3. Means according to claim 1 or 2, characterized in that the scrubber means (32) is a blower means disposed to accelerate the fluid flow composed of the fluid flow (14) already accelerated in the pre-purification section (11) and the fluid flow (31) formed by the nozzles (30) of the second scrubbing liquid (26), to even higher velocity, and to serve as droplet separator, that the latter fluid flow (31) is purified from the liquid drops of the second scrubber liquid (26), which are flung against the walls of the lower part (36) of the fine-purification section (12) and then run to the bottom of said lower part (36), wherefrom they are conveyed back to the tank (25) of the second scrubbing liquid (26) through a

0134838

return line (37).

4. Means according to any one of claims 1-3, characterized in that the second scrubbing liquid (26) is a scrubbing liquid different from the first scrubbing liquid (17).

5. Means according to claim 4, characterized in that the first scrubbing liquid (17) is acid and the second scrubbing liquid (26) is an alkali.

6. Means according to any one of claims 1-5, characterized in that the quantity of the second scrubbing liquid (26) is less than that of the first scrubbing liquid (17).

European Patent
Office

**EUROPEAN SEARCH REPORT**

0134838

Application Number

EP 83 10 9456

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | US-A-4 008 056 (G. POTTER)<br>* Figure 2; column 4, line 64 - column 7, line 33 * | 1 | B 01 D 47/12<br>B 01 D 50/00<br>B 01 D 53/18 |
| | --- | | |
| D,A | EP-A-0 058 935 (VILJO JUHANA JÄRVENPÄÄ)<br>* Figure 1; page 4, line 7 - page 5, line 11 * | 1,3 | |
| | ----- | | |

| TECHNICAL FIELDS SEARCHED (Int. Cl. ³) |
|---|
| B 01 D 47/00<br>B 01 D 50/00<br>B 01 D 53/00 |

The present search report has been drawn up for all claims

| Place of search | Date of completion of the search | Examiner |
|---|---|---|
| THE HAGUE | 05-06-1984 | BOGAERTS M.L.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
 
& : member of the same patent family, corresponding document